# EUROPEAN PATENT APPLICATION

(11) **EP 1 533 511 A1**
(43) Date of publication of application: **25.05.2005**
(21) Application number: 03078614.9
(22) Date of filing: 18.11.2003
(51) Int. Cl.: F02K 9/95, F02K 9/96

(54) **Process for igniting a rocket engine and rocket engine**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Schöyer, Herman Fedde Rein, 2726 DV Zoetermeer (NL); Sanders, Hubertus Marie, 2624 CV Delft (NL); Mareé, Anton Gerhardus Maria, 2612 PJ Delft (NL)
(74) Representative: Prins, Adrianus Willem, Mr. Ir.

(57) **Abstract**

A process for igniting a rocket motor or rocket engine is presented, wherein a fuel rich propellant, propellant mixture, or propellant streams for the rocket motor or rocket engine is ignited by decomposing at least one liquid igniter liquid to provide an oxygen rich hot gas.

## Description

### Background of the invention

The invention is directed to an igniter for rocket motors or rocket engines to ignite fuel rich propellant, propellant mixtures, or propellant streams.

Many rocket motors or rocket engines need an igniter to start the engine (it is more or less common to indicate rocket motors that use solid propellants as a rocket motor and those that use liquid propellants as a rocket engine). This is the case for rocket engines that do not use hypergolic propellants (i.e. propellants that ignite spontaneously when brought into contact with each other) or catalysts such as the well-known Shell 405® catalyst (30% iridium on alumina) that is commonly used in conjunction with hydrazine mono propellant thrusters. Other rocket motors or engines using solid propellants or liquid propellants such as kerosene and oxygen (used in the first stage of the Saturn 5) or hydrogen and oxygen (used in the Vulcan engine of the Ariane 5 or the main engines of the US Space Shuttle) need to be ignited.

The igniters are varied: solid propellant igniters, pyrotechnic igniters, pyrogen igniters, igniters based on a spark plug, igniters with a spark plug and torch, igniters with special chemicals that are hypergolic with one of the main propellants or igniters based on pyrophoric chemicals (a pyrotechnic igniter mainly generates hot particles, a pyrogen igniters generates hot gas and resembles a small solid rocket motor).

In all cases where the igniter produces a hot flame to ignite the main propellants, the flame is fuel rich. This is a serious disadvantage as also a fuel rich cold propellant, a fuel rich propellant mixture or fuel rich streams of cold propellants have to be ignited.

Pyrotechnic igniters and pyrogen igniters based on solid propellants contain materials that are explosives and therefore have to be handled with special care. Igniters that use a spark plug require high electric tension devices and special spark plugs in view of the required high reliability of the ignition system. If a torch is used, a special feed system for the torch propellants is required. All this makes that presently rocket motor ignition devices are rather unique and complex systems, often specially developed for one specific rocket motor and even generic designs that can be scaled to the particular application are practically impossible. All existing rocket motor or rocket engine igniters suffer from these shortcomings. The present invention overcomes these aspects by being applicable to solid rocket motors and liquid rocket engines, contrary to existing igniters providing oxidizer rich high temperature ignition gases and allowing a generic igniter design.

All multi propellant (i.e. bi-propellant or tri-propellant) rocket engines use a fuel rich propellant mixture as the maximum performance of a rocket engine or motor depends primarily on two parameters:
- the combustion temperature, T, and
- the molar mass of the combustion products, M.

These two parameters are primarily determined by the selected propellant combination and their mixture ratio.

The molar mass should be low (this is the reason that hydrogen is often used as fuel) and the combustion temperature should be high. In fact, the ratio of the combustion temperature and molar mass (T/M) should be maximized. Oxidizers have a high molar mass; most fuels a low one. The most common fuel elements are hydrogen (M=2) and carbon (M=12). Often these fuels are in the form of a compound or mixture of compounds like kerosene and other hydrocarbons, rubbers or plastics. In solid rocket motors also aluminium (M=27) is used as a fuel because it leads to a very high combustion temperature. The main oxidizers are oxygen (M=32) and oxygen-based compounds such as HNO₃ and N₂O₄ while in solid propellants ammonium perchlorate (NH₄ClO₄) is a common oxidizer. The high molar mass of oxygen makes that after combustion the highest performance is obtained with fuel rich mixtures as this maximizes T/M. Here T is the combustion temperature in the combustion chamber of the rocket motor or engine and M is the mean molar mass of the combustion products. For that reason rocket motors or engines always use a fuel-rich mixture.

Rocket motors or engines that use hypergolic propellants do not need an igniter. The two propellants ignite spontaneously upon contact.

Many rocket motors or engines and especially high performance liquid rocket engines use non-hypergolic liquid propellants while all solid rocket motors use solid propellants. Examples of non-hypergolic liquid rocket engines are:
- The HM-7 (used as an upper-stage engine on the Ariane-4 and foreseen to be used on Ariane 5) that uses liquid oxygen and liquid hydrogen in a mixture ratio 6 (stoichiometric mixture weight ratio is 8).
- The HM-60 Vulcain that is the main engine on Ariane 5 and that also uses liquid oxygen and liquid hydrogen in a mixture ratio close to 6.
- The American RL-10 that also uses liquid oxygen and liquid hydrogen in a fuel rich mixture ratio (5 to 6),
- The American RL-60 that also uses liquid oxygen and liquid hydrogen in a fuel rich mixture ratio (5 to 6),
- The Japanese LE 5 that is also a cryogenic engine using liquid oxygen and liquid hydrogen in a fuel rich mixture ratio (5),
- The Japanese LE 7, a cryogenic engine using liquid oxygen and liquid hydrogen in a fuel rich mixture ratio (6 for the LE-7 and 5,9 for the LE-7A),
- The foreseen VINCI engine that uses liquid oxygen and liquid hydrogen in a fuel rich mixture ratio (close to 6),
- The F1 engine of the Saturn 5 that used liquid oxygen and kerosene in a fuel rich mixture ratio of 2,27.
   (in this context the stoichiometric ratios are given by weight)

All solid rocket motors use either double base propellants (a very fuel rich mixture of nitrocellulose and nitro-glycerine) or composite propellants based on a mixture of a plastic or rubber with metal powder (usually aluminium) together acting as fuel and an oxidizer such as ammonium perchlorate, ammonium nitrate, hydrazinium nitroformate or ammonium dinitramide. Typical examples of such motors are the Ariane 5 solid boosters, the solid boosters of the US Space Shuttle, the boosters of the Ariane 4, and many military missiles. Here too, the mixture ratio is always fuel rich.

There are (and have been) a great many ignition systems in use:

The F1 used a pyrophoric mixture (85% triethylborane +15% triethylaluminium) that spontaneously ignites when coming into contact with air or (liquid) oxygen as is the case in the F1 engines of the Saturn 5.

Electric spark plugs that ignite a mixture of gaseous oxygen and gaseous hydrogen are also used. However, the mixture ratio of such igniters is fuel rich to cool the igniter and prevent over heating.

Other engines are ignited by pyrogen igniters. This is the case with all modern solid rocket motors and with many liquid rocket engines. Examples of the latter are the HM-7 and the HM-60 Vulcain. Older solid motors have used pyrotechnic igniters

A problem is that one usually tries to ignite a fuel-rich mixture with a fuel-rich igniter flame. This is against all logical thinking as a reliable, fast, reproducible ignition is required, and this is best achieved around a stoichiometric mixture ratio. Notwithstanding the fact that fuel rich igniters nowadays ignite all rocket motors, this may cause severe problems. Amongst others, this has been illustrated by the HM-7. Twice the HM-7 has failed to ignite properly in flight causing a mission failure. Amongst others, the ignition failure was caused by a fuel rich flame trying to ignite a fuel rich mixture. The cost of these two failed launches amounted to about G 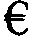 1: split into about M 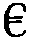 200 for the loss of two Ariane 4 launchers, and about M 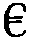 800, the cost of the lost satellites itself. Although the problem was rectified without changing the composition of the igniter propellant, it illustrates the sensitiveness of the ignition and the large costs associated with an ignition failure.

Re-ignition is sometimes a requirement for rocket motors. In that case, pyrotechnic and pyrogen igniters are less suitable as these can only be used once; the same applies for pyrophoric igniters. In principle, one could provide an engine with a set of pyrotechnic, pyrogen or pyrophoric igniters, but to assure proper ambient conditions (temperature, pressure) of the remaining igniters during engine operation a very complex control system may be required, and usually, the more complex, the more expensive and the less reliable a system becomes.

Electrical (spark plug) ignition allows multiple ignitions and has demonstrated this on numerous occasions. A problem of existing electrical ignition systems is that they require many components: spark plug ignition requires a high-tension electrical circuit, a reliable spark plug and two valves to admit the oxidizer and fuel in the correct sequence and proportion. This leads to relatively complex systems and is one of the reasons that also for liquid engines often pyrotechnic, pyrogen or pyrophoric igniters are being used.

The present invention solves these problems for igniting fuel rich propellants: it allows multiple ignitions, provides hot oxidizer rich ignition gases, does not require high-tension electrical circuitry and is relatively simple. Moreover, the invention lends itself to a generic design that has mainly to be adapted in size for the various applications. More in particular this means that the principle of the system is independent of the specific type and size of rocket motor or engine.

### Summary of the invention

The invention is directed to a process for igniting a rocket motor or rocket engine, wherein a fuel rich propellant, propellant mixture, or propellant streams for the rocket motor or rocket engine is iginited by decomposing at least one igniter liquid to provide a oxygen rich hot gas.

In a second embodiment, the invention is directed to a process for igniting a rocket motor or rocket engine, wherein a fuel rich propellant, propellant mixture, or propellant streams for the rocket motor or rocket engine is ignited by catalytically decomposing igniter material to provide a oxygen rich hot gas.

In a third embodiment the invention is further directed to a rocket motor or rocket engine assembly comprising at least one rocket motor or rocket engine to be operated using a fuel rich propellant, propellant mixture, or propellant streams, means for feeding the said propellant, propellant mixture, or propellant streams to the said rocket motor or rocket engine and means for igniting the said fuel rich propellant, propellant mixture, or propellant streams, said means comprising a storage tank for an igniter liquid containing at least one of H₂O₂ and solutions of hydrazinium nitroformate (HNF) and/or ammonium dinitramide (ADN) in water, a catalyst for decomposing the igniter liquid to produce an oxygen rich hot gas and means for feeding the oxygen rich hot gas to the rocket motor or engine to ignite the fuel rich propellant, propellant mixture, or propellant streams.

Preferred embodiments of the invention will become clear from the following detailed description of the invention.

### Detailed description of the invention

The principle of the invention is based on the use of an oxygen rich hot gas for igniting a fuel rich propellant, propellant mixture, or propellant streams for a rocket motor or rocket engine. It has been found that this method will overcome, most or all of the drawbacks of the known systems as discussed above.

The invention comprises an igniter for rocket motors or rocket engines that provides oxidizer-rich hot gas to fuel-rich propellant or propellants or streams of propellants or mixtures of propellants that have to be ignited. This is preferably achieved by using a storable liquid oxidizer that is decomposed catalytically, thereby releasing heat. This heat of decomposition raises the temperature of the combustion products to well over 1000 K. This is more than sufficient to heat and ignite rocket propellants. The liquid oxidizers can be stored for prolonged periods at room temperature, under pressure, are safe and require no specific safety measures, beyond those that are common for chemicals. The storage pressure exceeds the pressure at which the rocket motor or engine, or a pre-combustion chamber has to be ignited. The ignition pressures usually are substantially less than the steady state operation pressure of the engines, but nevertheless may easily exceed 4 MPa. The oxidizers can be stored at these high pressures without problems. Suitable oxidisers, i.e. materials (preferably liquid) that are energetic materials able to provide oxygen rich hot gas (i.e. T > 750 K), are ADN, HNF, H₂O₂, Ammonium perchlorate, ammonium nitrate, hydroxyl-ammonium nitrate and combinations thereof, optionally in the form of an aqueous solution thereof. Generally it is preferred to use either hydrogen peroxide, pure or in aqueous solution, or aqueous solutions of HNF and/or ADN.

Specifically, the following oxidizers that can be decomposed catalytically are of interest for the igniters of this invention:
- Hydrogen peroxide (H₂O₂).
- A solution of ∼70% ADN in water (∼70% NH₄N(NO₂)₂ + ∼30% H₂O)
- A solution of ∼ 50% HNF in water (∼50 % N₂H₅C(NO₂)₃ +∼50% H₂O)
- A solution of 50% to 70% mixture of HNF and ADN in water

The table below gives the temperature of the decomposition products and their main composition at 4 and 8 MPa.

| **Oxidizer** | **Properties of decomposition products** | | |
|---|---|---|---|
| | | 4MPa | 8MPa |
| 90% H₂O₂ | Temperature (K) | 1022 | 1022 |
| | Mass % O₂ | 42,33 | 42,33 |
| | Mass % H₂O | 57,67 | 57,67 |
| 50% HNF +50% H₂O | Temperature (K) | 1038 | 1038 |
| | Mass % O₂ | 6,55 | 6,55 |
| | Mass % H₂O | 62,3 | 62,3 |
| | Mass % N₂ | 19,13 | 19,13 |
| | Mass % CO₂ | 12,02 | 12,02 |
| 70% ADN + 30% H₂O | Temperature (K) | 1061 | 1061 |
| | Mass % O₂ | 18,05 | 18,05 |
| | Mass % H₂O | 50,34 | 50,34 |
| | Mass % N₂ | 31,61 | 31,61 |

All these liquid oxidizers produce hot oxygen rich gases ranging from over 5 wt.% oxygen to over 42 wt.% oxygen and the gas temperatures all exceed 1000 K. This temperature is more than sufficient to ignite any (fuel rich) combustible mixture of fluids.

To activate the liquid oxidizer, it is preferably passed over a catalyst where it decomposes. Depending on the liquid oxidizer, different decomposition catalysts can be used. In general the catalysts will be solid heterogeneous catalysts, wherein the catalytically active material has been applied to a suitable support or is present in a suitable shape. Examples are fixed bed catalysts based on supported catalytically active material, the supports being porous granules or extrudate of inert material, granules or extrudate of catalytically active material and meshes or screens of (supported) catalytically active material.

In a preferred embodiment one of the following combinations of oxidisers and catalysts may be used.
- Hydrogen peroxide is easily decomposed by silver. Silver plated brass, stainless steel or nickel screens, silver screens, have successfully been used in various applications. Other possible catalysts (that may be deposited on a support such as zeolite molecular sieve, alumina, a silica/alumina or silica, titania, zirconia and the like) are: Ag₂O, RuO₂, MnO₂, Mn₂O₃, K, MnₓO_{y}.
- Solutions of HNF and/or ADN in water may be decomposed catalytically by (optionally supported) metals from the Pt group, such as rhenium, rhodium, osmium, iridium, and platina. Catalyst beds on an alumina support are commercially available (e.g from Shell, Aerojet, Degussa and Rhône Poulenc). The other supports mentioned above may also be used.
While the hot gases can be used to ignite any combustible mixture, the invention is of particular interest for the ignition of non-hypergolic liquid rocket motors and solid motors.

Another extremely interesting application is for test facilities where repeatedly rocket motors or other combustors have to be ignited for test purposes. The igniter of this invention avoids the use of expensive or hazardous igniters or ignition systems that often have to be used.

### Description of figures

In the attached figures,
Figure 1 shows a schematic pressure regulated ignition system, and
Figure 2 a blow-down ignition system.

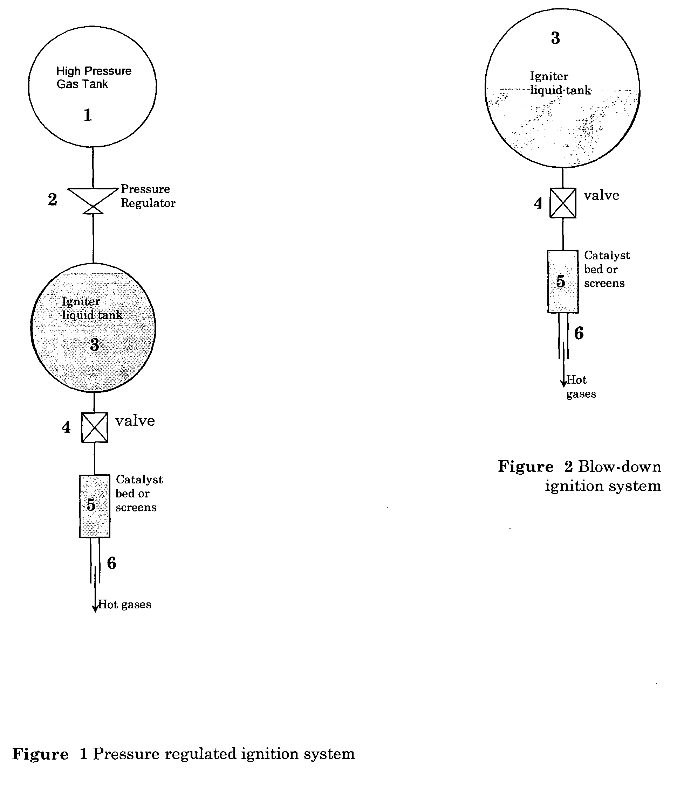

In the set-up of Fig. 1, the ignition liquid is stored in a tank (3) that is pressurized to the required pressure by gas stored in a high-pressure gas tank (1). The pressurant gas can be any inert gas that is commonly used to pressurize rocket propellants, e.g. N₂ or He. A pressure regulator (2) controls the pressure in the tank with ignition liquid.

Between the tank with ignition liquid (3) and the catalyst bed or screens (5) is an electric, or otherwise activated, latching valve (4) that can be opened and closed on command. This provision allows for multiple ignitions at a constant ignition pressure. For an upper stage, if one wants to isolate the high pressure gas tank (1) from the tank with ignition fluid (3), a valve (pyro valve or latching valve) can be placed upstream of the pressure regulator (2). Normally, a filter will be placed downstream of any pyro valve and upstream of the pressure regulator. This is not shown in Figure 1, but is common practice in rocket propulsion systems and known to the specialists in the field.

By opening the valve (4) ignition fluid is admitted to the screens or catalyst bed (5) where it decomposes into hot, oxygen rich gases. These gases leave the screens or catalyst bed via the igniter tube (6) that opens into the rocket motor or rocket engine combustion chamber. The igniter tube may have any suitable shape to fit into the combustion chamber and have a special shape to enhance mixing of the hot oxygen rich igniter gases with the propellants to be ignited or impinge on the propellant to be ignited. To this end the igniter tube may introduce a swirl to the igniter gases, inject them sideward with respect to the main axis of the rocket motor or engine. By closing valve (4), the ignition sequence can be terminated. Contrary to pyrogen or pyrotechnic igniters, the igniter according to this invention allows to determine experimentally during development tests the optimum duration of the ignition process as this only depends on the duration that valve (4) is opened. To do this with a pyrotechnic or pyrogen igniter, one would have to develop different igniters for every ignition duration. As there is a high pressure gas tank (1) and a pressure regulator (2) the igniter, according to the schematic of Figure 1, operates at a constant pressure. This allows also multiple ignitions at the same pressure, which pressure can be selected to be the most suitable ignition pressure for that particular rocket motor or rocket engine.

The dimensions of the ignition system depend on the total amount of ignition liquid to be stored in the tank (3), the pressure at which the system has to operate and the required mass flow rate of the ignition liquid. The pressure regulator (2) can be set to a lock-up pressure in accordance with the required operating pressure. This will affect the mass flow rate of the ignition liquid. To control the mass flow rate the system allows mounting a cavitating venturi between the tank (3) and the valve (4), or between the valve (4) and the catalyst bed or screens (5). In this way the mass flow rate is controlled independently of the tank pressure. By selecting the proper dimensions of the cavitating venturi for every application, it is possible to use the same universal igniter for a wide range of requirements without changing major system components.

The tank with the ignition liquid only needs a small ullage volume as the system operates in the pressure-regulated mode.

A simpler schematic diagram for an ignition system according to the present invention is given in Figure 2. Here the ignition system operates in blow-down mode. The difference with the ignition system from Figure 1 is that the pressurant gas tank and pressure regulator are absent, while the tank with ignition liquid (3) is only partially filled with ignition liquid while the remainder of the tank volume is filled by a pressurant gas, such as nitrogen, helium or other suitable pressurant gas. The large initial ullage volume avoids large pressure drops during the ignition sequence or for successive ignitions. Using a large ullage volume for tanks containing liquids, is common practice in rocket propulsion and known to specialists in the field. The ignition fluid tank is pressurized to a pressure level that is adequate for the number of ignitions that have to be performed and in accordance with the specified ignition conditions in the rocket motor or rocket engine.

In case only one single ignition is required, the latching valve (4) can be replaced by a pyro valve. In that case a filter may be placed downstream of the pyro valve (4) and upstream of the catalyst bed or screens (5). This is common practice in rocket propulsion systems and known to the specialists in the field.

The dimensions of the ignition system depend on the total amount of ignition liquid to be stored in the tank (3), the pressure at which the system has to operate and the required mass flow rate of the ignition liquid. For systems that require a different operating pressure the ullage pressure in the tank (3) may be adjusted. This will change the mass flow rate of the ignition liquid. To control the mass flow rate the system allows mounting a cavitating venturi between the tank (3) and the valve (4), or between the valve (4) and the catalyst bed or screens (5). By selecting the proper dimension of the cavitating venturi for every application, it is possible to use the same universal igniter for a wide range of requirements without changing major system components.

Other layouts are not excluded, the simplified schematics are provided as typical examples but do not limit or exclude other arrangements.

The advantages of this invention compared to the existing ignition systems are the following:
1. Dramatic reductions in mass as compared to gaseous ignition systems because the tanks can be much smaller. The density of 90% H₂O₂ is 1360 kg/m³. The density of the ADN and HNF solutions is similar. This means that much smaller and lighter tanks can be used than if gaseous H₂ and O₂ are used for (multiple) ignition(s).
2. In case a blow-down system is used, only one tank is required, while for gaseous H₂/O₂ ignition at least two tanks are necessary.
3. In all cases, there is only one single line for the ignition fluid and not two as is the case if two propellants such as CH₄ or Kerosene or H₂ as fuel and O₂ as oxidizer are used to ignite the fuel rich gases.
4. Increased safety: pyrotechnic, pyrogen and pyrophoric igniters are a safety hazard. Pyrotechnic and pyrogen igniters use an explosive mixture and have to be initiated by a pyrotechnic initiator. To prevent accidental ignition a Safe & Arm device is usually installed. All these safety measures contribute to the mass and complexity and introduce failure modes. It also requires a reliable electrical ignition circuit and an electrical circuit to arm/disarm the Safe & Arm device.
5. The transport and handling of pyrotechnic devices requires specific safety measures.
6. Electro-gaseous ignition systems require a high-tension (voltage) current and a spark plug. This requires an elaborate electrical system that is not required for a catalytic ignition system.
7. Because of the simplicity of the system, (single component, no explosives) the reliability of the ignition system according to the present invention is strongly enhanced as compared to existing ignition systems.
8. Because according to the present invention a fuel rich mixture is ignited with oxidizer rich hot gases, the performance and reliability is strongly enhanced and the ignition delay is reduced.
9. The ignition system according to the present invention can be easily adjusted for different ignition pressures and ignition flow rates by adjusting the pressure regulator (2), adjusting the ullage pressure in the ignition liquid tank (3) and by incorporating a cavitating venturi between the ignition liquid tank (3) and the valve (4) or between the valve (4) and the catalyst bed or screens (5).
10. The ignition system according to the present invention allows for a generic design that only has to be scaled for the specific application.
11. Because of the simplicity and safety of the ignition system, this system is also ideally suited for test facilities if ignition devices are required there.

## Claims

1. Process for igniting a rocket motor or rocket engine, wherein a fuel rich propellant, propellant mixture, or propellant streams for the rocket motor or rocket engine is ignited by decomposing at least one igniter liquid to provide a oxygen rich hot gas.

2. Process according to claim 1, wherein only one liquid is used as the igniter liquid.

3. Process for igniting a rocket motor or rocket engine, wherein a fuel rich propellant, propellant mixture, or propellant streams for the rocket motor or rocket engine is ignited by catalytically decomposing an igniter fluid to provide an oxygen rich hot gas.

4. Process according to claim 1-3, wherein the igniter liquid is selected from the group consisting of hydrogen peroxide, hydrazinium nitroformate, ammonium dinitramide and combinations thereof.

5. Process according to claim 1-4, wherein the igniter liquid is hydrogen peroxide, preferably in a concentration of more than 90%.

6. Process according to claim 1-4, wherein the the igniter liquid is a solution of hydrazinium nitroformate in water, preferably in a concentration of hydrazinium nitroformate of 30 wt.% to 50 wt.%.

7. Process according to claim 1-4, wherein the igniter liquid is a solution of ammonium dinitramide in water, preferably in a concentration of between 40 and 70 wt.%.

8. Process according to claim 1-7, wherein the igniter liquid is decomposed catalytically by passing the liquid over a catalyst bed or through catalyst screen or mesh and where the oxygen rich hot decomposition gases are led into the rocket motor or rocket engine combustion chamber to ignite the motor or engine.

9. Process according to claim 1-8, wherein a tank containing the igniter liquid is pressurized by an inert gas from a high pressure gas tank, and where the pressurization pressure is controlled by a pressure regulator or an igniter liquid tank is pressurized by an inert gas at a pre-set pressure and that operates in blow-down mode.

10. Process according to claim 9, wherein a filter is present downstream of the high pressure gas tank.

11. Process according to claim 3-10, wherein where the catalyst is silver or MnO₂ in case the igniter liquid is based on H₂O₂; or
a metal selected from the group as rhenium, rhodium, osmium, iridium, and platinum in case the igniter liquid is based on solutions of hydrazinium nitroformate and/or ammonium dinitramide in water.

12. Process according to claim 11, wherein the silver is deposited on a mesh or screen of other metal, such as stainless steel, nickel, brass or copper.

13. Process according to claim 11 or 12, wherein the catalyst metal is deposited on an inert heat resistant material with high porosity such as porous aluminium oxide.

14. Process according to claim 11-13, wherein for an igniter liquid based on H₂O₂ the catalyst is selected from the group consisting of Ag₂O, RuO₂, MnO₂, Mn₂O₃, K, MnₓO_{y} deposited on alumina, silica/alumina or silica or titania based zeolites.

15. Process according to claim 3-14, wherein there is a cavitating venturi between the tank containing the igniter liquid and the catalyst bed or catalyst screens to control the mass flow rate.

16. Rocket motor or rocket engine assembly comprising at least one rocket motor or rocket engine to be operated using a fuel rich propellant, propellant mixture, or propellant streams, means for feeding the said propellant, propellant mixture, or propellant streams to the said rocket motor or rocket engine and means for igniting the said fuel rich propellant, propellant mixture, or propellant streams, said means comprising a storage tank for an igniter liquid containing at least one of H₂O₂ and solutions of hydrazinium nitroformate and/or ammonium dinitramide in water, a catalyst for decomposing the igniter liquid to produce an oxygen rich hot gas and means for feeding the oxygen rich hot gas to the rocket motor or engine to ignite the fuel rich propellant, propellant mixture, or propellant streams.

17. Rocket motor or rocket engine assembly according to claim 16, wherein the catalyst is
- silver or MnO₂ in case the igniter liquid is based on H₂O₂; or
- a metal selected from the group consisting of rhenium, osmium, iridium, and platinum in case the igniter liquid is based on solutions of hydrazinium nitroformate and/or ammonium dinitramide in water.

18. Test facility for testing rocket motors and/or engines and/or igniters and/or propellants, said means comprising a storage tank for an igniter liquid containing at least one of H₂O₂ and solutions of hydrazinium nitroformate and/or ammonium dinitramide in water, a catalyst for decomposing the igniter liquid to produce an oxygen rich hot gas.
